Europäisches Patentamt

European Patent Office

Office européen des brevets

(11) Publication number: **0 392 748**
**A2**

# EUROPEAN PATENT APPLICATION

(21) Application number: 90303691.1

(22) Date of filing: 06.04.90

(51) Int. Cl.⁵: **B60C 9/08, B60C 9/20**

(30) Priority: 11.04.89 JP 93890/89

(43) Date of publication of application:
17.10.90 Bulletin 90/42

(84) Designated Contracting States:
DE FR GB

(71) Applicant: SUMITOMO RUBBER INDUSTRIES
LIMITED
1-1 Tsutsuicho 1-chome Chuo-ku
Kobe-shi Hyogo-ken(JP)

(72) Inventor: Ueyoko, Kiyoshi
2-10-2 Fukaeminami, Higashinari-ku
Osaka-shi, Osaka-fu(JP)
Inventor: Takatsu, Mikio
1-12-18 Takatsukasa
Takarazuka-shi, Hyogo-ken(JP)
Inventor: Miyazaka, Shinichi
3-7-43 Miyuki-cho, Suma-ku
Kobe-shi, Hyogo-ken(JP)
Inventor: Yonekawa, Yasusuke
1-8 Koshienguchi 1-chome
Nishinomiya-shi, Hyogo-ken(JP)

(74) Representative: Stewart, Charles Geoffrey
SP TYRES UK LIMITED Tyre Technical
Division
Fort Dunlop Erdington Birmingham B24
9QT(GB)

(54) High speed radial tyre.

(57) A high speed radial tyre for heavy loads comprises a carcass (7) which includes carcass cords made of organic fibres inclined at an angle of 75 to 90 degrees to the tyre's equator, a belt (10) which includes belt cords made of organic fibre inclined at an angle of 5 degrees or less to the tyre's equator and disposed outside the carcass (7) and a cur breaker (14) which includes supplemental cords inclined at an angle of 0 to 70 degrees to the tyre's equator and disposed between the carcass (7) and belt layer (10). The carcass cords are made of an elastic cords having a stretch S5 (%) upon loading with 5kg of 5 to 10.

FIG1

## High Speed Radial Tyre

The present invention relates to a high speed radial tyre suitable for heavy loads which has improved structural durability and cornering performance.

Since the size and the flight speed of aircraft have increased, the operating speed and the load for high speed radial tyres for heavy load especially those for aircraft, have increased. It is necessary to resist taxiing conditions where a heavy load acts for a relatively long time although at a lower speed when moving between a runway and a gate in addition to the following:-

To have a resistance against a succession of large deformations, since the amount of deformation is as large as 28 to 38% in the loaded state so that the shock when an aircraft takes of or lands on a runway is absorbed.

To have resistance to high speed rotating with a heavy load and large deformation, since the take-off and landing speed have increased due to the requirements of high speed.

To have resistance to a load which is 130 to 360 times (approximately 50 times in a normal tyre) the unit weight of the to give a lighter aircraft, and against the load of the very high internal pressure which is required of 10 to 16 kg/cm².

Moreover, while moving between the runway and the gate, since the aircraft is often obliged to change direction, it is necessary to provide increased cornering properties to prevent aircraft roll in and to improve aircraft stability. Such an improvement in stability also helps to prevent aircraft and pitch during take off and landing.

On the other hand, for aircraft tyres cross ply tyre constructions are widely used, where the carcass cords are arranged to mutually cross between the plies. However, as the crossing angle of the carcass cords is relatively large, the horizontal rigidity of such a tyre is larger, and they are not very good in other characteristics such as wear resistance and heat generating property. Also they have low rigidity of the tread region and are heavier in weight. Although they are quite good in aircraft control characteristics. However, since the performance of large jet aircraft has improved in recent years crossply tyres are now becoming of limited use.

Therefore, recently, radial tyres having a belt layer composed of elastic belt cords which are inclined at a small angle to the tyres equator placed outside in the radial direction a carcass of so-called radial or semi-radial structure in which the carcass cords are aligned approximately at a right angle to the tyre's equator are coming into use.

However, although in a tyre for an aircraft having such a radial structure, a large hoop effect can be obtained in the circumferential direction of the tread by the belt cords being aligned substantially in the direction of the tyre's equator, the bending strength of the outer surface of the tread can be improved and thus the wear resistance and rolling characteristics to improve the durability of the tyre thereby by belt plies of cords mutually crossing at smaller angles and approximately at right angles to the carcass cords to mutually form rectangular shapes, in a conventional radial tyre, the bending strength of the inner surface is inferior, which results in losses in the cornering force when running resulting in sways and inferior aircraft control stability, and a lack of structural durability.

In Japanese Laid-open patent No. 61-196804, it is suggested to form a band layer outside the belt layer of a tyre for aircraft. Despite the structural durability being increased in such a tyre compared to previous tyres, a still higher structural durability is now demanded as the size and the flight speeds of aircraft have been still further increased.

In addition, in a conventional radial tyre, it was found that the durability of the bead region is relatively poorer than the durability of the remainder of the tyre. It was also found that standing waves tend to be generated relatively.

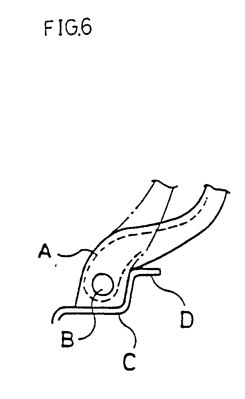

In regard to the durability of the bead region, since the flexion rate in the radial direction of the tyre under load is as high as 28 to 38% as above mentioned, it is evident that a compressive stress acts on a carcass cord of the carcass A of the bead region at the folded part around the bead core B, as shown in Fig. 6, and a tensile force which pulls the carcass cord is generated inside in the direction of tyre's axis.

It is also found that damage in the bead region occurs near the upper end of the rim flange C. It was proved by the results of a drum test that due to compression caused by the sudden bending of the region caused by the bead region falling towards the upper flange piece D which is extending in the axially outward direction of the tyre from the upper end of the rim flange C, the compression stress is concentrated in that region and the part maybe broken by fatigue due to repetition of the compressive strains caused by the large compressive stress acting on the carcass cords of the region, and the broken end causes the further concentration of compressive stress in a specific part to cause damage in the bead region.

It was found that this compression stress can be decreased by using an elastic cord having high stretchability as the carcass cord and adding a stretch beforehand.

Furthermore, the standing wave is a phenomenon which occurs in the tread region when the tyre is run and such waves reduce the durability of the tyre, and more specifically, by exciting the bead region through the sidewall deteriorates durability. In a high speed radial tyre for heavy loads for aircraft or the like, as aforementioned, since the change in shape of the tyre is large and the landing and take-off speeds are as high as more than 300 km/hr, standing waves tend to be generated. As widely known, a standing wave of a radial tyre can be obtained by the following formula 1.

$$Vc = \sqrt{T / m + 2\sqrt{E1 \cdot K / m}} \qquad \ldots 1$$

where
Vc: critical speed of standing wave generation
m: mass of unit length of the tread part
E1: bending strength of the inner tyre surface of the tread part
T: belt tension
K: spring constant of the carcass

This formula 1 is obtained by supposing that the belt layer is an infinite length beam supported elastically by the carcass, and it is known that in order to increase the critical speed of standing wave generation Vc, the strength E1, belt tension T and spring constant of the carcass K should be increased, while the mass m is decreased.

In order to decrease the natural frequency of the belt to increase the critical speed of standing wave generation Vc without decreasing the mass m, a large tension T should be applied to the belt by filling with high internal pressure, and it is proved that, by this, the apparent bending strength E1 of the inner surface of the tyre in the tread can also be improved to increase the critical speed Vc.

When an elastic cord as mentioned above is used as a carcass cord for this purpose, the critical speed of standing wave generation can be increased and the durability of the bead region can be improved by increasing the apparent bending strength. However, in the case where such elastic cord is used as a carcass cord, it is found that the cornering force of the tyre is decreased.

It is hence a primary object of the invention to provide a high speed radial tyre for heavy loads which demonstrates a sufficient cornering performance and has a superior structural durability even when an elastic cord is used as a carcass cord.

According to one aspect of the invention, a high speed radial tyre for heavy loads comprises a carcass composed of one or more plies of carcass cords made of organic fibres inclined at an angle of 75 to 90 degrees to the tyre's equator which extends from a tread part through a sidewall part to a bead region and is folded around a bead core in each of two bead regions, a belt layer composed of one or more plies of belt cords made of organic fibres aligned at an inclination of 5 degrees or less to the tyre's equator which is positioned outside the carcass in the radial direction and inside the tread part, and a cut breaker composed of one or more plies of supplemental cords aligned at an inclination of 0 to 70 degrees to the tyre's equator which is positioned between the carcass and the belt layer, wherein an elastic cord having a stretch 55 (%) upon loading with 5kg of 5 to 10 is used for the carcass cord.

By employing the cut breaker between the carcass and the belt layer, the bending strength of the inner surface of the tread region is improved.

The carcass cord is inclined at an angle of 75 to 90 degrees to the tyre's equator, and the belt cords at 5 degrees or less. Therefore by arranging the supplemental cords of the cut breaker to give a triangulated structure with the belt cords and the carcass cords, the bending strength of the inner surface is improved, and thus, in the case where the carcass cords are placed at right angles, the supplemental cords are placed in such a manner crossing them. In the case where the carcass cords are placed at an angle of, for example, 75 degrees; the supplemental cords may be parallel to the tyre's equator. Thus, the inclination of the supplement cord to the tyre's equator should be 0 to 70 degrees. However, preferably, it should be 10 to 45 degrees and more preferably, 10 to 30 degrees; and thus by forming a strong triangulated structure, the carcass and the belt layer combine, the bending strength of the inner surface of the tread region is increased, and the resultant cornering force is improved.

Furthermore, as elastic cords having a large stretchability under loading are used as the carcass cords, it is possible to add a tensile force to the carcass cord by applying a high stretch by internal pressure. Such a tensile force decreases the compressive stress acting on the carcass cords in the rim flange side of the bead regions. Therefore, it is possible to prevent generation of localised stress caused by changes of shape due to the compression and breakage caused by fatigue, to reduce concentration of stress in the bead region, and to improve the durability of the bead region.

In addition, by applying a specified internal pressure, since the expansion rate of the tread region, especially the crown is made high, which increases the tensile force T of the belt layer as well as increasing the apparent strength E1 of the tread region, the critical speed of standing wave generation is thus increased substantially and its generation in service is prevented. Thus transmission of standing waves generated in the tread to the bead regions through the sidewalls repetition of stress in the bead and changes of shape can be prevented which improves the durability of the bead region.

In conventional physical characteristics of the cord, in addition to the compressive stress in the sectional direction of the folded part of the carcass cord in the bead part, a complicated stress by standing waves has been added, but by preventing the standing waves, the durability of the bead part can be further improved.

Embodiments will now be disclosed by way of example only in conjunction with the attached drawings, in which,

Fig.1 is a half sectional view showing one embodiment of the invention,

Fig. 2 is a sectional view showing another embodiment

Figs.3A and B are diagrams showing cord characteristics,

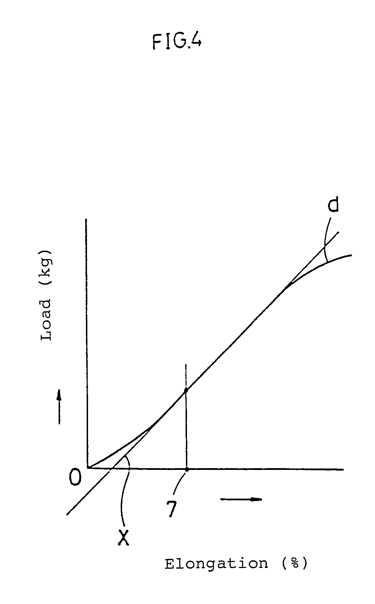

Fig.4 is a diagram explaining the initial elastic modulus,

Fig.5 is a plan view showing an example of the protective cord, and

Fig.6 is a diagram showing an example of changes in shape of the bead.

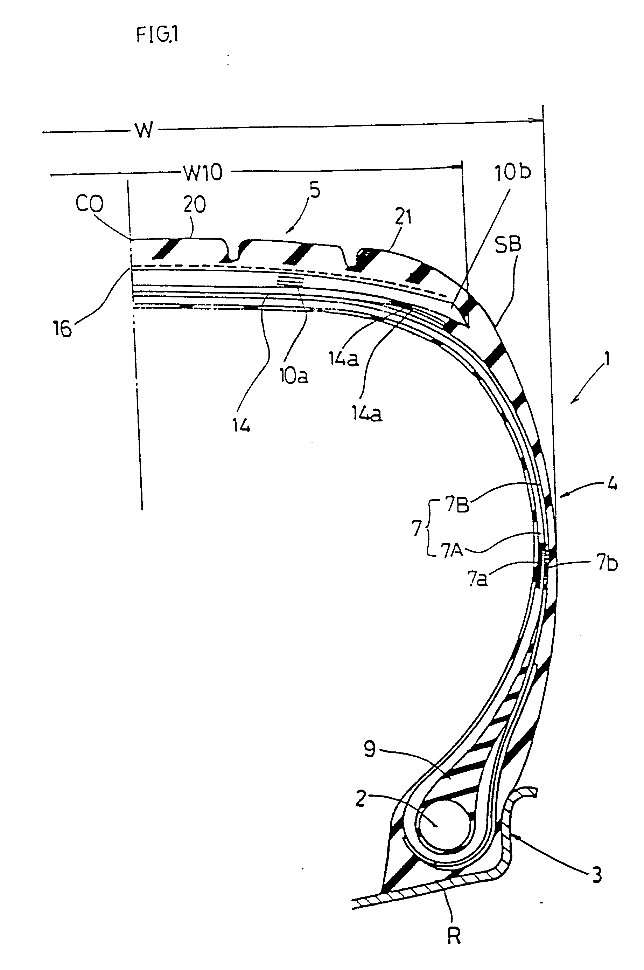

The tyre 1 shown in Fig.1 is a 46 x 17R20 aircraft radial tyre which is mounted on a standard rim and filled with a standard internal pressure. The tyre 1 comprises a bead region 3 with an annular bead core 2 through it, a sidewall 4 connecting the bead region 3 and extending outwardly in the radial direction of the tyre and a tread 5 connecting the outer ends of the two sidewalls 4.

In addition, the tyre 1 has a carcass 7 comprising an inner layer 7A composed of a plurality of, for example, four, carcass plies 7a which wrap or fold around a bead core 2 from the inside to the outside of the tyre and an outer layer 7B composed of a plurality for example two, carcass plies 7b which enclose the folded part of the inner layer 7A and are wrapped from the outside to the inside of the tyre. Each carcass cord of the carcass plies 7a and 7b is positioned in the radial direction at an inclination of 75 to 90 degrees to the tyre's equator. And in the carcass 7 of the embodiment, by inclining the carcass cord in the radial direction of the tyre to be crossed mutually between adjacent carcass plies, the horizontal rigidity of the tyre is improved.

Above the bead core 2, a bead apex 9 comprising a tapered rubber member extending in the radial direction of the tyres is constructed to increase rigidity and to disperse stresses by flexion of the folded over or turned up part of the carcass 7. In the outer surface of the bead region 3, a chafer (not shown) which prevents chafing of the tyre by the rim may be also provided.

Furthermore, a belt layer 10 comprising belt cords aligned at an inclination of 5 degrees or less to the equatorial surface of the tyre is formed radially outside the carcass 7 and inside the tread part 5, and between the belt layer 10 and the carcass 7, a cut breaker 14 is provided plies of supplemental cords in the range of 0 degrees or 70 degrees to the equatorial surface of the tyre. Moreover, in the embodiment, a cut protector ply 16 of a protective cords is placed outside the belt layer 10.

The belt later 10 comprises a plurality of for example six to ten plies 10 a... each of belt cords. The belt plies 10a... are gradually reduced in width in the outward radial direction so the belt package has a taper trapezoidal cross section. and its sides regions 10b are each inclined substantially parallel to the outer surface SB of the tyre buttress parts. The widest width W10 of the belt layer, i.e. the width of the inner ply 10a in the embodiment, is set to be within the range of 75 to 85% of the overall width W. The bell cords are mutually inclined from ply to ply 16a in reverse directions.

The cut breaker 14 comprises for example, two cut breaker plies 14a each of supplemental cords mutually inclined in reverse directions. The cut breaker 14 gradually separates from the carcass 7 in the axially outer parts of the shoulders and its outer end terminates slightly inwards of the outer edge of the belt 10. The outer edge of the cut breaker 14 may be adjusted to be at the outer edges of the belt layer or may be slightly outwards thereof.

Since the cut breaker 14 is employed to increase the bending strength of the inner surface of the tread part 5 as well as increasing the cornering force, it is preferably arranged to form a triangulated structure with the carcass cords and the nearest ply cords. Therefore, as the carcass cords and the belt cords are inclined at angles of 75 to 90 degrees and 5 degrees or less respectively to the tyre's equator the supplemental cords of the cut breaker should be inclined at an angle of 10 to 45 degrees more preferably 10 to 30 degrees to the tyre's equator. In the case where the inclination of the carcass cords is 75 to 80 degrees, the inclination of the supplemental cords to the tyre's equator may be set nearly at 0 degrees. Thus, the supplemental cords are inclined at an angle of 0 to 75 degrees.

In such a manner, by increasing the bending strength of the inner surface by adding the cut breaker 14 and by employing a triangular structure formed by the carcass cords and the belt cords, the cornering force is increased. The structural durability is also improved in such a manner.

The cut protector 16 comprises at least one, in the embodiment one ply 16 made by using the protective cord and portioning it outside the belt layer 10. The cut protector 16 improved the resistance to cutting damage from the outside as well as reducing the step or difference in rigidity between the belt layer 10 and the rubber of the tread 5, thereby reducing the shearing stress between them.

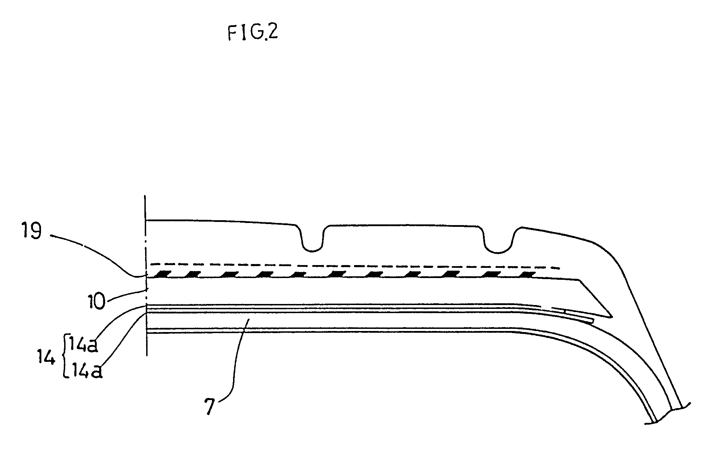

For the purpose, it is preferable to place the cut protector 16 on the top surface of the belt later 10. It is also preferable to set the inclination angle of the cords to the tyre's equator close to 0 degrees to add stretchability to the protective cord in order to allow preferable changes in shape in the belt layer 10. Furthermore, in place of one ply layer 2,3 or more plural layers may be used for the cut protector 16, and, as shown in Fig.2, a rubber layer 19 may be placed between the belt layer 10 and the cut protector 16. Such a rubber layer 19 enables easier removal of the cut protector 16 without damaging the belt layer 10 for retreading or reconditioning of the tyre.

The carcass cords, belt cords, supplemental cords and protective cords are described in detail below.

An elastic cord having a high stretchability is used for the carcass cord. The stretch S5 (%) of the elastic cord upon loading with 5 kg should be 5 to 10 (preferably 5 to 8). Moreover, the stretch S10 (%) upon loading with 10 kg and the stretch S20 (%) upon loading with 20 kg should be 9 to 15 (Preferable 10 to 12) and 14 to 20, respectively.

Preferably in addition the carcass cord has a divided value D(5%) of the stretch S(5%) upon loading with 5 kg by the actual total denier number of the cord between .000735 and .00147. In addition, the divided value D10(%/d) the stretch S upon loading with 10 kg by the actual total denier number of the cord and the divided value D20 (%/d) of the stretch S20(%/d) upon loading with 20 kg by the denier number of cord are .00132 to .00221 and .00205 to .00294.

The measuring method for the actual total denier number of the cord is as follows:-

A sample is accurately taken by applying the initial load to the cord so that the total length comes to be 9 m or longer.

The mass is measured, the absolute dry mass is obtained by leaving it for two hours or more in dryer at a temperature of 105 degrees C plus or minus 2 degrees° C and drying it until it comes to constant weight, and the fitness based on corrected weight is calculated from the following formula;

$$\text{Actual total denier number } d = \frac{W' \times 9000 \times (1 + Rc/100)}{\ell}$$

where $W'$ absolute dry mass of the sample Rc official region (nylon 4.5%)

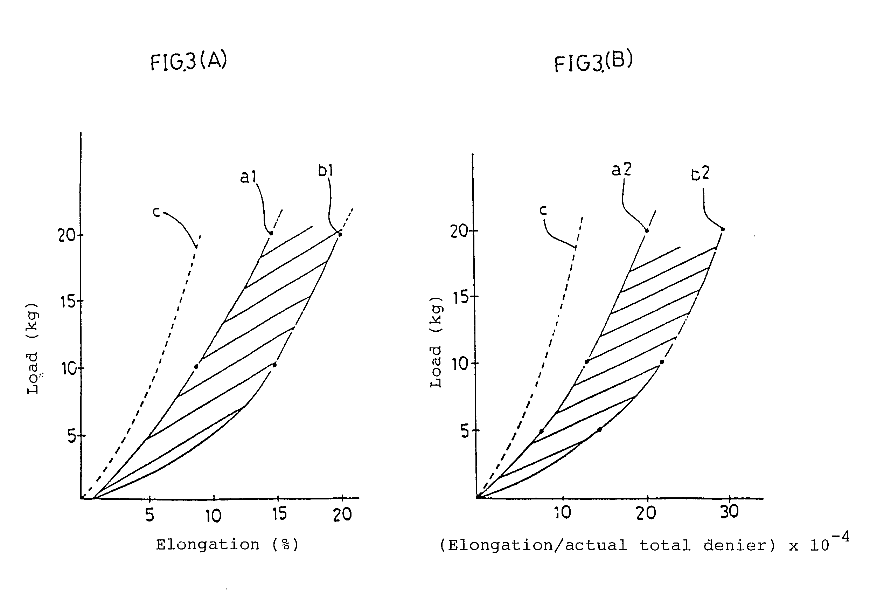

In Figs. 3A and 3B, such an elastic cord has characteristics within a range between the lowest curves a1 and a2, and the highest curves b1 and b2. As shown by curves a and b (combining a1 and a2 to give curve a, and b1 and b2 to give curve b in general), such an elastic cord has such a characteristic that its stretch is larger as the load is smaller, and the stretching ratio decreases as the load increases.

By using an elastic cord having such a characteristic, in the initial stages of inflating with internal pressure, the more the tyre is inflated with the internal pressure, the more the carcass cord is stretched.

When the load is increased to 10 kg and 20 kg, the carcass cord is stretched according to the increase of the load, but the stretching ratio decreases.

In the case of using a conventional cord shown by curve c which is steeper in comparison with the curve a approximately forming a straight line, even by inflating with high internal pressure, the stretch of the carcass cord is smaller, and it is inferior in reducing the compressive stress acting in deformations.

Compared to this, as the elastic cord has characteristics within the range between the curves a and b, the durability of the tyre is improved.

The specifications of the stretches S10(%) and S20(%) of the carcass cord upon loading with 5 kg, 10 kg and 20 kg, respectively, specify the stretching rates of the cord upon load regardless of the actual total denier number of the carcass cord used. On the other hand, the other specification is the divided value D5-(%/d) of the stretch S5(%) upon loading with 5 kg by the actual total denier number, which indicates the stretching ratio per actual total denier of the cord upon loading with 5 kg, identifying the carcass cord mainly from the point of characteristics of the cord, and therefore, it is adopted in a wide range of high speed tyres for heavy load such as a tyre for aircraft to specify the stretch upon loading with a specified load. The former mainly specifies the value preferably used mainly in tyres for aircraft, especially those for large sized jet aircraft.

The initial elastic modulus Es (km/mm ) of the elastic cord should be 130 or more (preferably 140 or more) and 200 or less.

The initial elastic modulus Es (kg/sq.mm ) is defined as the inclination of a tangent X of a curve d when the stretch is 7% by drawing the load (kg) and stretch (%) curve d by using a tensile tester of constant rate extension type, and by setting the initial elastic modulus Es (kg/sq.mm ) at a smaller number within the range in comparison with the conventional elastic cord to improve stretchability of the elastic cord additional stretch can be added to the carcass cord.

For the elastic cords, cords having 30 kg of load upon breakage, i.e. a 3kg cord strength, and more preferably 40 to 60 kg is preferably used.

For the elastic cord, a combined cord of one or more of nylon cord, polyester cord, aromatic polyamide cords, carbon cords and metallic cords is used.

Moreover, a cord having such physical characteristics can be obtained by applying a , smaller tension during dip stretching which is the prior application of tension and heat to a cord depending on time when using an organic fibre cord, than the tension used in a conventional dip stretch. In order to further improve the characteristics, when using a nylon cord, for example, the number of twists per 10cm should be 26 to 36 T/10 cm, which is an increase compared with the conventional number of twists of approximately 23 T/10cm. By combining cords having a larger stretching ratio and smaller stretching ratio and providing a slackness in the cord with a smaller stretching ratio by prior coiling it, the stretching ratio of the entire cord can be decreased when the load teaches a specified value, as the cord with a smaller stretching ratio bears the load.

The carcass cord is embedded in a base rubber, i.e. a topping rubber to form the carcass plies 7a and 7b. A rubber which allows the characteristics of the cord as well as strengthening and providing low heat generating characteristics is used for the base rubber. For such purpose, a base material comprising one or more types of natural rubber and synthetic isoprene rubber combined with 50 to 70 parts by weight of carbon and having a modulus of 30 to 70 kg/sq.cm at 100% and an elongation of 200% at breakage is preferably used. If the content of carbon is less than 50 parts by weight, the strengthening characteristic deteriorates, and if it exceeds 70 parts by weight, the heat generating characteristic tends to increase. If the 100% modulus is less than 30 kg/sg. cm, the heat generating characteristic increases, and it exceeds 70 kg/sq. cm, the reinforcing tends to be deteriorated. If the elongation at breakage is less than 200% as it lacks the correspondence to the strain of the carcass, the rubber tends to be broken, and it exceeds 500% the heat generating characteristic tends to be increased.

In a tyre of carcass 7 of such cords by previously applying a larger stretch to the carcass 7 in comparison to a conventional tyre, when the bead region 3 is bent on landing and take off, the compression stress of the carcass cords generated an the side of the rim flange C is decreased, and the compression strain is lowered, thus preventing changes of shape, partial bending and, furthermore, breakage or the like based on fatigues caused by the compressive strain. In addition, the compressive stress of the rubber itself of the bead region 3 can be reduced, and the durability of the bead can be improved, for example by more than 10%.

If elastic cord as used in the carcass 7, the strain caused by inflating with internal pressure tends to be centralised in the side wall part, especially near the widest part. To prevent this, the belt cord 11 should have similar stretching characteristics to the carcass cord and the stretch S5 (%) upon loading with 5kg of a smaller number than the carcass cord to be 3 to 6, or the divided value D5 (%/d) of the stretch S5 (%) by the actual total denier number (d) should be .00385 to .000769. As a cut breaker cord, a cord having similar characteristics to the belt cord should be used. The material of the cord may be different.

A relatively thick cord with the same diameter of 1260 D/2 to 2700 D/3, for example, is used for the belt cord 11 and the carcass cord, and a cord having the same or smaller diameter is used for the supplemental cord.

Moreover, the belt layer 10 can also be formed as an endless type by the so called cord winding method where one or several cords are wound in a spiral shape to form the layer 10.

The same cord as the belt cord is used for the supplemental cord. By using such an elastic cord in the carcass cord, belt cord 11 and the supplemental cord, in the case of inflating with a specified internal pressure in comparison with inflating with 5% of internal pressure, the building rate of the crown part 20 is increased, thereby increasing the tension T of the belt cord 11, and the critical speed of standing wave

6

generation is improved.

As previously mentioned, the critical speed of standing wave generation can be obtained by the following formula 1.

$$VC = \sqrt{T/m + 2\sqrt{E1 \cdot K/m}} \quad \ldots 1$$

where Vc critical speed of standing wave generation
m mass of unit length of the tread part
E1: bending strength of inner tyre surface of the tread part
T: belt tension
K: spring constant of the carcass

Thus by increasing the belt tension G, the apparent bending strength, of the inner surface E1 of the tread part can be increased as well as the speed Vc to prevent generations of standing waves. As the result, changes in shape of the bead region caused by the wave stress which is transmitted from the tread part 5 through the side walls 4 to the bead region 3 and the increase of compressive stress is prevented, and thereby, the durability of the bead region can be prevented from deteriorating.

As the cut protector 16 is formed mainly to improve the cutting resistance, as previously mentioned, organic fibre cords such as nylon cord, aromatic polyamide cord are used as well as steel cord. In the case than an organic fibre cord having stretchability is used, the protective cord may be placed in the direction of the tyre's equator.

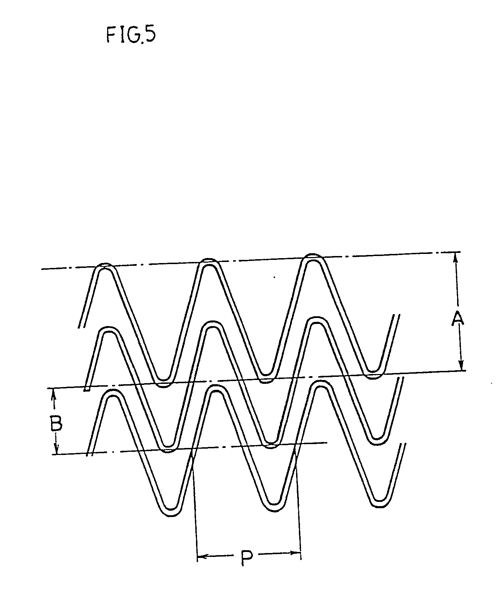

On the other hand, if a steel cord having a smaller stretchability is used, it should be inclined at an angle of 30 to 90 degrees to the tyre's equator to add stretchability is used, it should be inclined at an angle of 30 to 90 degrees to the tyre's equator to add stretchability as a ply, or, as shown in Fig.5, placed in the direction of the tyre's equator after forming waves in the cord to add stretchability, for example.

A succession of different shapes of waves such as an arc curve, sine curve, triangular and rectangular shapes may be formed in the cord.

In the case of using a formed protective cord 17, the pitch P should be 0.86 to 3.0 times the overall amplitude A to increase the stretchability. The distance B in the direction of the tyre's axis between adjoining protective cords should be 0.2 to 2.0 times the overall amplitude A. In this case, the diameter of the cord should be approximately 0.1 to 1.2mm.

Moreover, in the case of using a formed protective cord, to control changes in shape in a direction different from the plane surface of forming such as wavy changes of shape in the crossing direction to the surface of forming caused by twisting or the like, it is preferably to combine steel cords of two layered twist, preferably a primary twist different from the final twist. By using a cord with a final twist and a fibre having a relatively large diameter, the cutting resistance and the forming characteristic can be improved.

In order to employ in the cut protector 16 a property that reduces the rigidity between the tread rubber and the belt layer 10, the diameter of the protective cord of the cut protector cords 16 should be as small as 0.20 to 0.50 of the diameter of the carcass cord. In other words, a cord having a diameter of approximately 300 to 1350 d/3 should be employed for the protective cord.

Example tyres made for test will now be described having specification shown in Table 1. These were produced in a tyre size of 46 x 17R20 with the structure shown in Fig.1. Prototypes of tyres as shown in the columns as comparison examples were also produced. In these tyres the numbers of plies in the carcass were two in the cut breaker, eight in the belt layer, and one in the cut protector. Signs showing the cord structure of the carcass cord, breaker cord and supplemental cord in the figure are shown in Table 2./ A wavy steel cord was used for the protective cord, and the diameter of the cord was 0.87 mm, pitch (P) 16 mm its full amplitude 6mm and distance 3mm. The ply turn up structure of the carcass was 4 - 2 in all cases.

The tyres were inflated to the specified internal; pressure, and the durability was tested based on a taxi simulation test according to the Federal Aviation Administration Technical Standard TSO-C62c. The results are shown by the number of times to breakage in the figure. Numeral 61 shows that the tyre attained the complete running. Those that could resist a take-off with 200% of loading are marked with a circle.

The cornering force was measured by using an indoor tester of the flat belt type and are shown by an index setting the index of the comparison example 1 at 100. The larger number shows the better result.

Secondly prototype tyres of the embodiments 9 to 11 and comparison example 5 and 6 as shown in Table 3 were produced in a tyre size of 30 x 8.8R15, and the cornering force was measured in the same manner as before. In all cases, the load was 4,000 kg, and the internal pressure was 12.3 kg/sg.cm . As evident by comparing the embodiments 9 and 10 with the comparison examples 5 and 6 in table 3, even in the case where the sum of the plies of the belt layer and the cut breaker were set at a specified number, by placing the cut breaker ply inside the belt layer as in the invention, the cornering force was improved.

Thus, a tyre of the invention can improve the cornering force and increase the controlling stability.

Table 1

| | Embodiment 1 | Embodiment 2 | Embodiment 3 | Embodiment 4 | Embodiment 5 | Embodiment 6 | Embodiment 7 | Embodiment 8 |
|---|---|---|---|---|---|---|---|---|
| Carcass | | | | | | | | |
| Structure of cord | A - 1 | A - 1 | A - 1 | A - 1 | A - 2 | A - 3 | A - 2 | A - 2 |
| Inclination of cord | 85 | 85 | 85 | 85 | 75 | 75 | 85 | 85 |
| Belt layer | | | | | | | | |
| Structure of cord | B - 1 | B - 1 | B - 2 | B - 2 | B - 1 | B - 1 | B - 1 | B - 1 |
| Inclination of cord | 0 | 0 | 0 | 0 | 0 | 0 | 5 | 5 |
| Cut-breaker | | | | | | | | |
| Structure of cord | C - 1 | C - 2 | C - 1 | C - 2 | C - 1 | C - 1 | C - 1 | C - 1 |
| Inclination of cord | 19 | 19 | 19 | 19 | 5 | 35 | 42 | 42 |
| Cut-protector | Absent | Absent | Absent | Present | Present | Absent | Absent | Present |
| Durability | O | O | O | O | O | 61 | O | O |
| Cornering force | 130 | 130 | 130 | 135 | 120 | 130 | 130 | 130 |

| | Comparison example 1 | Comparison example 2 | Comparison example 3 | Comparison example 4 |
|---|---|---|---|---|
| Carcass | | | | |
| Structure of cord | A - 1 | A - 1 | A - 3 | A - 3 |
| Inclination of cord | 85 | 85 | 85 | 85 |
| Belt layer | | | | |
| Structure of cord | B - 1 | B - 2 | B - 1 | B - 1 |
| Inclination of cord | 0 | 0 | 0 | 0 |
| Cut-breaker | | | | |
| Structure of cord | Absent | Absent | Absent | Absent |
| Inclination of cord | | | | |
| Cut-protector | Present | Absent | Present | Absent |
| Durability | O | O | 61 | 61 |
| Cornering force | 100 | 100 | 100 | 100 |

EP 0 392 748 A2

Table 2

| Sign | Carcass cord | | | Belt cord | | Supplemental cord | |
|---|---|---|---|---|---|---|---|
| | A - 1 | A - 2 | A - 3 | B - 1 | B - 2 | C - 1 | C - 2 |
| Material of cord | NYLON6,6 | NYLON6,6 | NYLON6,6 | NYLON6,6 | NYLON6,6 | NYLON6,6 | NYLON6,6 |
| Diameter of cord | 1890d/3 | 1890d/3 | 1890d/3 | 1680d/4 | 1680d/4 | 1680d/4 | 1680d/4 |
| Twist number of cord (number/100 mm) | 26 | 34 | 23 | - | - | - | - |
| $S_5$ (%) | 6.2 | 7.7 | 4.5 | 4.8 | 4.1 | 4.8 | 4.1 |
| $S_{10}$ (%) | 9.5 | 11.7 | 7.5 | 8.2 | 6.8 | 8.2 | 6.8 |
| $S_{20}$ (%) | 14.7 | 17.5 | 11.2 | 11.3 | 9.7 | 11.3 | 9.7 |
| $D_5$ (%/d) $\times 10^{-4}$ | 9.84 | 11.32 | 7.32 | 6.15 | 5.54 | 6.15 | 5.54 |
| $D_{10}$ (%/d) $\times 10^{-4}$ | 15.08 | 17.20 | 12.20 | 10.51 | 9.19 | 10.51 | 9.19 |
| $D_{20}$ (%/d) $\times 10^{-4}$ | 23.33 | 25.74 | 16.00 | 14.49 | 13.11 | 14.49 | 13.11 |
| Elongation at breakage (%) | 24.8 | 26.8 | 19.6 | 22.4 | 17.2 | 22.4 | 17.2 |
| Tension of cord (kg) | 48.2 | 43.8 | 54.0 | 52.5 | 56.5 | 52.5 | 56.5 |
| Initial elasticity (kg/mm$^2$) | 175 | 145 | 270 | 234 | 320 | 234 | 320 |

Table 3

| | 30 × 8.8 R 1 5 | | | |
|---|---|---|---|---|
| | Embodiment 9 | Embodiment10 | Embodiment11 | Comparison example |
| Carcass | | | | |
| Structure of cord<br>Inclination of cord<br>Number of plies | A - 1<br>85<br>6 | A - 1<br>85<br>6 | A - 1<br>85<br>6 | A - 1<br>85<br>6 |
| Belt layer | | | | |
| Structure of cord<br>Inclination of cord<br>Number of plies | B - 1<br>3<br>3 | B - 1<br>3<br>3 | B - 1<br>3<br>3 | B - 1<br>3<br>5 |
| Cut-breaker | | | | |
| Structure of cord<br>Inclination of cord<br>Number of plies | C - 1<br>29<br>2 | C - 1<br>17<br>2 | C - 1<br>17<br>2 | Absent |
| Cut-protector | Present | Absent | Present | Absent |
| Cornering force | 132 | 129 | 131 | 100 |

**Claims**

1. A high speed radial tyre for heavy loads characterised by a carcass (7) composed of at least one carcass ply (7a,7b) comprising carcass cords made of organic fibres inclined at an angle of 75 to 90 degrees to the tyre's equator and which extends from a tread (5) part through a side wall (4) and is wrapped around a bead core (2) in each of two bead regions (3), a belt layer (10) composed of at least one belt ply which has belt cords of organic fibres inclined at an angle of 5 degrees or less to the tyre's equator and which is positioned outside the carcass (7) in the radial direction and inside the tread (5), and a cut breaker (14) composed of at least one ply of supplemental cords inclined at an angle of 0 to 70 degrees to the tyre's equator and which is positioned between the carcass (7) and the belt layer (1) wherein the said carcass cords are made of an elastic cord having a stretch S5(%) upon loading with 5kg of 5 to 10.

2. A high speed radial tyre according to claim 1 characterised in that said belt layer (10) is provided with a cut protector (16) comprising a ply of protective cords positioned radially outside the belt layer.

3. A high speed radial tyre according to claim 1 or 2 characterised in that each of the said carcass cords has a stretch S10 (%) upon loading with 10 kg of 9 to 15 and a stretch S20 (%) upon loading with 20 kg of 14 to 20.

4. A high speed radial tyre according to claim 2, characterised in that each of said belt cords has a stretch S5 (%) upon loading with 5 kg of 3 to 6.

5. A high speed radial tyre according to any of claims 1 to characterised each of said carcass cord has a divided value D5 (%/d) of the stretch S5 upon loading with 5 kg by the actual total denier number d of the cord of 7.

6. A high speed radial tyre according to any of claims 1 to 5 characterised in that each of said carcass cords has a divided value D10 (%/d) of the stretch S (%) upon loading with 10 kg by the actual total denier number d of the cord of .00132 to .00221, and a divided value D20 (%/d) of the stretch S20 (%) upon loading with 20 kg by the actual total denier number d of the cord of .00206 to .00294.

7. A high speed radial tyre according to any of claim 1 to 6 characterised in that each of said belt cords has a divided value D5 (%/d) of the stretch S5 (%) upon loading with 5 kg by the actual total denier number d of the cord of .000385 to .000769.

8. A high speed radial tyre according to any of claim 1 to 7 characterised in that each of said belt cords has a divided value D10 (%/d) of the stretch S5 (%) upon loading with 10 kg by the actual total denier number d of the cord of .000641 to .001026 and a divided value D20 (%/d) of the stretch S (%) upon loading with 20 kg by the actual total denier number d of the cord of .001026 to .001759.

FIG.1

EP 0 392 748 A2

FIG.2

FIG.3(A)

FIG.3(B)

Elongation (%)

(Elongation/actual total denier) x 10^-4

EP 0 392 748 A2

FIG.4

FIG.5

FIG.6